# EUROPÄISCHE PATENTSCHRIFT

(11) **EP 2 279 336 B1**
(45) Veröffentlichungstag und Bekanntmachung des Hinweises auf die Patenterteilung: **25.04.2012**
(21) Anmeldenummer: 09735137.3
(22) Anmeldetag: 04.02.2009
(51) Int. Cl.: F01N 3/20, G01M 3/04, G01M 3/20, C09K 11/06

(54) **AMMONIAKTANK EINER ABGASBEHANDLUNGSANLAGE EINES FAHRZEUGS**
AMMONIA TANK OF AN EXHAUST GAS TREATMENT SYSTEM OF A VEHICLE
RÉSERVOIR D'AMMONIAC D'UNE INSTALLATION DE TRAITEMENT DES GAZ D'ÉCHAPPEMENT D'UN VÉHICULE

(30) Priorität: 23.04.2008 DE 102008001340
(43) Veröffentlichungstag der Anmeldung: 02.02.2011
(73) Patentinhaber: Robert Bosch GmbH, 70442 Stuttgart (DE)
(72) Erfinder: KAEFER, Sebastian, 70197 Stuttgart (DE); LINDEMER, Vera, 71254 Ditzingen (DE); BUERGLIN, Markus, 71254 Ditzingen (DE)
(86) Internationale Anmeldenummer: PCT/EP2009/051249
(87) Internationale Veröffentlichungsnummer: WO 2009/130066

(56) Entgegenhaltungen:
- WO-A-96/16321
- JP-A- 61 031 937
- JP-A- 2006 090 971
- US-A1- 2005 026 298

## Beschreibung

Die Erfindung betrifft einen Ammoniaktank einer Abgasbehandlungsanlage eines Fahrzeugs.

### Stand der Technik

Fahrzeuge mit Abgasbehandlungssystemen, insbesondere solche mit DeNox-Katalysatoren/selektiven Katalysatoren, müssen in bestimmten technischen Ausführungsformen Ammoniak oder eine Ammoniak freisetzende Substanz mitführen, da Ammoniak, insbesondere als Harnstoffwasselösung, als Reaktionsstoff in der Abgasbehandlungsanlage verwendet wird. Ammoniak ist ein in entsprechenden Konzentrationen reizendes Gas, dessen Freiwerden unerwünscht ist. Äußere Einwirkungen, beispielsweise durch einen Unfall oder sonstige unsachgemäße mechanische Einwirkung, können zu einem unkontrollierten Austritt von Ammoniak in die Umgebung führen. Das schnelle Austreten einer sehr großen Menge von Ammoniak kann hierbei zu einer unmittelbaren Vergiftung mit Reiz- und Ätzwirkung führen. Ein langsames, schleichendes Austreten durch kleinere Leckagen oder in sehr ungünstigen Fällen durch Korrosion führt zu einem stetigen Absinken des Vorrats, wobei in unüberwachten, abgeschlossenen Räumen auch ein unbemerktes Ansteigen der Ammoniakkonzentration erfolgen kann, wodurch sich ein eine toxische oder auch explosive Konzentration unbemerkt einstellen kann. Bedingt durch den niedrigen Geruchsschwellenwert ist bei Eindringen in den Fahrgastraum eine panische Reaktion selbst bei ungefährlichen Konzentrationen nicht völlig auszuschließen.

Die US 2005/0026298 beschreibt die Verwendung von Farbstofflösungen zur Detektion verdampfenden Ammoniaks.

Aufgabe der Erfindung ist es, auch in ungünstigen Fällen das Freiwerden von Ammoniak aus dem Ammoniaktank weitestgehend zu vermeiden, wofür ein entsprechender Ammoniaktank zur Verfügung gestellt werden soll.

### Offenbarung der Erfindung

Hierzu wird ein Ammoniaktank einer Abgasbehandlungsanlage eines Fahrzeugs mit einer Tankwandung vorgeschlagen. Es ist vorgesehen, dass die Tankwandung von einem in Bezug auf Ammoniak reagierenden Reagens umhüllt ist. Das Reagens ist hierbei beispielsweise ein Feststoff oder beispielsweise eine Paste, von der die Tankwandung außenseitig umhüllt ist. Wenn nun Ammoniak austritt, beispielsweise aufgrund einer Verletzung der Tankwandung, tritt es in Kontakt zu dem Reagens und reagiert mit diesem. Hierdurch kann vermieden werden, dass Ammoniak in unerwünschter Menge freigesetzt wird. Insbesondere die Ausbildung des Reagens als pastöse Substanz, die beispielsweise auf die Außenseite der Tankwandung aufgetragen wird, lässt durch die Fließeigenschaften von Pasten zu, dass immer hinreichend Reagens an der Austrittsstelle zur Verfügung steht und die Reaktion mit austretendem Ammoniak erfolgen kann. Dabei ist vorgesehen, dass das Reagens mit Ammoniak zu einem Reaktionsprodukt reagiert, das ein Tankleckabdichtungsprodukt darstellt. Ein Tankleckabdichtungsprodukt ist hierbei ein solches, das ein eventuelles Leck in der Doppelwandung abzudichten in der Lage ist, also insbesondere im Zuge eines raumgreifenden Prozesses das Leck verschließt und/oder zumindest abschnittsweise dergestalt durchdringt, dass der Durchtritt von Ammoniak nicht mehr möglich ist.

In einer anderen Ausführungsform ist vorgesehen, dass der Ammoniaktank ein Druckbehälter ist, der eine Ammoniak freisetzende Substanz aufweist oder enthält, insbesondere einen Adsorber, Komplexbildner oder ein Ammoniaksalz. Das Ammoniak wird hierbei im Druckbehälter aus der freisetzenden Substanz freigesetzt, liegt dort also im Wesentlichen gebunden vor. Die Freisetzung erfolgt nach Bedarf und wird über die aus dem Stand der Technik bekannten Regel- und Steuereinrichtungen veranlasst.

In einer anderen Ausführungsform ist die Tankwandung zumindest als Doppelwandung ausgebildet und weist mindestens einen das gesamte Tankvolumen umgebenden Hohlraum auf, in dem sich ein in Bezug auf Ammoniak reagierendes Reagens befindet. Kern der Erfindung ist, dass das in dem Hohlraum eingebrachte Reagens mit dem Ammoniak reagiert, sobald die Tankwandung beschädigt ist, also insbesondere die innere Wandung der Doppelwandung beschädigt ist, so dass Reagens und Ammoniak miteinander reagieren können.

In einer Ausführungsform ist vorgesehen, dass das Reagens mit Ammoniak zu einem Reaktionsprodukt reagiert, das eine optische Anzeigefunktion, insbesondere Warnfunktion, besitzt. Hierbei ist beispielsweise denkbar, dass das Reaktionsprodukt farbig, insbesondere leuchtend farbig ist, so dass Undichtigkeiten sofort und ganz leicht erkennbar sind, insbesondere dann, wenn das Reaktionsprodukt anhaftend ist, so dass sich Verlaufsspuren zurückverfolgen lassen. Insbesondere ist es so möglich, eine eventuelle Leckstelle unmittelbar als solche aufzufinden und identifizieren zu können.

In einer anderen Ausführungsform ist vorgesehen, dass das Reagens mit Ammoniak zu einem Reaktionsprodukt reagiert, das ein Tankleckabdichtungsprodukt darstellt. Ein Tankleckabdichtungsprodukt ist hierbei ein solches, das ein eventuelles Leck in der Doppelwandung abzudichten in der Lage ist, also insbesondere im Zuge eines raumgreifenden Prozesses das Leck verschließt und/oder zumindest abschnittsweise dergestalt durchdringt, dass der Durchtritt von Ammoniak nicht mehr möglich ist.

In einer weiteren Ausführungsform ist vorgesehen, dass das Reagens mit Ammoniak zu einem für den Menschen nicht schädlichen Neutralisationsprodukt reagiert. Das Neutralisationsprodukt ist demnach ein solches, das für den Menschen gesundheitlich nicht bedenklich ist. Die für den Menschen unerwünschten Eigenschaften des Ammoniak, also insbesondere seine ätzende und/oder reizende Eigenschaft, werden hierbei neutralisiert. Ganz besonders bevorzugt ist das Neutralisationsprodukt auch für Materialien unschädlich, so dass eine unerwünschte Veränderung, insbesondere chemische Veränderung, von Konstruktionsmaterialien des Kraftfahrzeugs durch Austreten des Ammoniak nach Neutralisation zum Neutralisationsprodukt nicht mehr erfolgt.

Bevorzugt ist das Reagens aus der Gruppe der Salze eines oder mehrerer Erdalkalielemente, beispielsweise MgCl₂ oder CaCl₂.

Eine weitere bevorzugte Ausführungsform des Reagens ist ein Salz eines oder mehrerer 3D-Nebengruppenelemente, beispielsweise Mangan, Eisen, Kobalt, Nickel, Kupfer und/oder Zink.

In einer anderen bevorzugten Ausführungsform ist das Reagens ein organischer Adsorber oder ein Ammoniumsalz, beispielsweise Ammoniumcarbamat.

Das Reagens kann auch eine Säure oder ein sauer reagierendes Salz sein, etwa auch eine Lewis- oder Brönsted-saure Verbindung.

Besonders bevorzugt ist das Reagens aus der Gruppe von Stoffen gewählt, die in Gegenwart von Ammoniak Komplexe bilden. Solche Komplexbildner sind in der Lage, zu Feststoffen zu verdichten und insbesondere Leckagen abzudichten. Gleichzeitig werden im Regelfall völlig unschädliche Verbindungen hergestellt.

In einer Ausführungsform liegt das Reagens als monolithischer oder poröser Festkörper vor. Es ist folglich in der Form eines Festkörpers der bezeichneten Art in den von der Doppelwandung ausgebildeten Hohlraum eingebracht.

In einer anderen Ausführungsform liegt das Reagens als Granulat- oder Pulverschüttung vor. Solche Schüttungen sind einfacher und billiger in den Hohlraum einzubringen, beispielsweise durch eine eigens hierfür vorgesehene Öffnung, die nach Befüllung wieder verschließbar ist.

In einer weiteren Ausführungsform liegt das Reagens als pastöse oder gelartige Substanz vor.

In einer weiteren Ausführungsform ist das Reagens ein Schaumbildner.

In einer wiederum anderen Ausführungsform ist das Reagens ein Gas, insbesondere ein solches, das sich selbst nur in geringem Umfange verschleicht. Hierdurch wird sichergestellt, dass es im Falle einer Beschädigung des Ammoniaktanks von außen nicht verflüchtigt, bevor es mit dem austretenden Ammoniak hinreichend reagieren konnte.

Bevorzugt ist in dem Hohlraum eine solche Menge an Reagens eingebracht, die ausreicht, das gesamte, bei vollständiger Befüllung des Ammoniaktanks maximal austretende Ammoniak zu binden. Die Bemessung des Reagens in dem Hohlraum erfolgt demzufolge vorzugsweise so, dass das Reagens in einer solchen Menge vorliegt, dass entsprechend der Stöchiometrischen Gleichung der Ablauf in der Reaktion zumindest ein Gleichgewicht der Stoffe Reagens und Ammoniak vorliegt, bevorzugt aber ein deutlicher Überschuss an Reagens, dergestalt, dass selbst bei vollständiger Befüllung des Ammoniaktanks die Maximalmenge an austretendem Ammoniak zuverlässig durch die Reaktion gebunden werden kann.

In einer anderen Ausführungsform weist das Reagens eine wärmeisolierende Wirkung auf. Auf diese Weise kommt unterstützend zu den Sicherheitsfunktionen des Reagens noch eine Wärmeisolierung des Tankinhalts hinzu.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels näher beschrieben, ohne aber hierauf beschränkt zu sein.

Es zeigt die
- Figur: einen Ammoniaktank mit einem ein Reagens aufnehmenden, von einer Doppelwandung gebildeten Hohlraum.

### Ausführungsform(en) der Erfindung

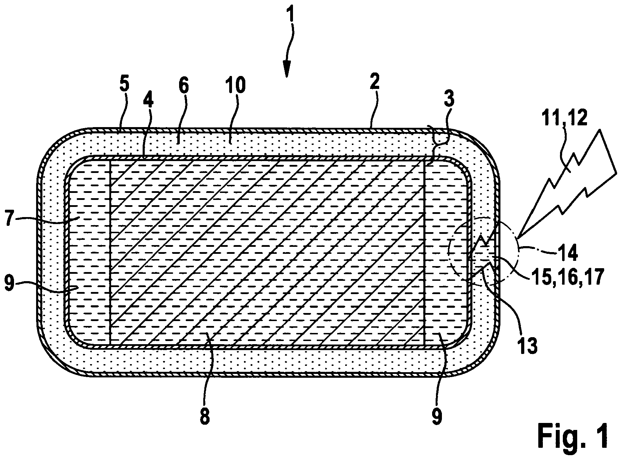

Die Figur zeigt einen Ammoniaktank 1 einer nicht dargestellten Abgasbehandlungsanlage eines nicht dargestellten Fahrzeugs. Der Ammoniaktank 1 weist eine Tankwandung 2 auf, die als Doppelwandung 3 ausgebildet ist, wobei diese Doppelwandung aus einer inneren Tankhülle 4 und einer äußeren Tankhülle 5 gebildet ist, und wobei zwischen innerer Tankhülle 4 und äußerer Tankhülle 5 ein Hohlraum 6 ausgebildet ist. Die Tankwandung 2 umschließt einen Tankinnenraum 7, in dem ein ammoniakspeicherndes Substrat 8 einliegt, aus dem Ammoniak 9 freigesetzt wird, das dem Ammoniaktank 1 über nicht dargestellte Entnahmevorrichtungen entnommen und der nicht dargestellten Abgasbehandlungsanlage zugeführt werden kann. In dem Hohlraum 6, der zwischen der inneren Tankhülle 4 und der äußeren Tankhülle 5 ausgebildet ist und der den Tankinnenraum 7 vollständig umgibt, ist ein Reagens 10 eingebracht, das mit dem Ammoniak 9 zu einem Reaktionsprodukt 16 reagiert. Solange die Tankwandung 2, insbesondere die innere Tankhülle 4 unbeschädigt ist, findet zwischen Ammoniak 9 und Reagens 10 keinerlei Reaktion statt. Wenn aber durch ein schädigendes Ereignis 11, insbesondere eine Außeneinwirkung 12, wie sie beispielsweise bei einem Unfall auftreten kann, die Tankwandung 2 verletzt, insbesondere durchstoßen wird, so dass es zu einer Schadstelle 13 kommt, wird die durch die innere Tankhülle 4 bestehende hermetische Trennung von Ammoniak 9 und Reagens 10 an dieser Stelle aufgehoben, so dass im Bereich der Schadstelle 13 eine Reaktion 14 zwischen Ammoniak 9 und Reagens 10 stattfindet. Bevorzugt wird hierbei ein für den Menschen nicht schädliches Neutralisationsprodukt 15 ausgebildet, das ätzende und reizende Eigenschaften von Ammoniak neutralisiert. Besonders bevorzugt ist das bei der Reaktion 14 gebildete Reaktionsprodukt 16 ein Tankleckabdichtungsprodukt 17, also ein solches, das in einem raumgreifenden Prozess aus Ammoniak 9 und Reagens 10 gebildet wird und hierbei die Schadstelle 13 zumindest überwiegend, ganz bevorzugt aber vollständig zu verschließen in der Lage ist. Das Reagens 10 liegt innerhalb des Hohlraums 6 in einer solchen Menge vor, dass das bei vollständiger Befüllung mit Ammoniak 9 des Tankinnenraums 7 maximal austretendes Ammoniakgas 9 vollständig gebunden werden kann, wenn hierbei zumindest ein stöchiometrisches Verhältnis zugrunde gelegt wird.

## Patentansprüche

1. Ammoniaktank einer Abgasbehandlungsanlage eines Fahrzeugs, mit einer Tankwandung, **dadurch gekennzeichnet, dass** die Tankwandung von einem in Bezug auf Ammoniak (9) reagierenden Reagens (10) umhüllt ist, wobei das Reagens (10) mit Ammoniak (9) zu einem Reaktionsprodukt (16) reagiert, das ein Tankleckabdichtungsprodukt (17) darstellt.

2. Ammoniaktank nach Anspruch 1, **dadurch gekennzeichnet, dass** der Ammoniaktank ein Druckbehälter ist, der eine Ammoniak freisetzende Substanz aufweist oder enthält, insbesondere einen Adsorber, Komplexbildner oder ein Ammoniaksalz.

3. Ammoniaktank nach einem der vorhergehenden Ansprüche, **dadurch gekennzeichnet, dass** die Tankwandung (2) zumindest als Doppelwandung (3) ausgebildet ist und mindestens einen das gesamte Tankvolumen umgebenden Hohlraum (6) aufweist, in dem sich das Reagens (10) befindet.

4. Ammoniaktank nach einem der vorhergehenden Ansprüche, **dadurch gekennzeichnet, dass** das Reagens(10) mit Ammoniak (9) zu einem Reaktionsprodukt (16) reagiert, das eine optische Anzeigefunktion, insbesondere Warnfunktion, besitzt.

5. Ammoniaktank nach einem der vorhergehenden Ansprüche, **dadurch gekennzeichnet, dass** das Reagens (10) mit Ammoniak (9) zu einem für den Menschen nicht schädlichen Neutralisationsprodukt (15) reagiert.

6. Ammoniaktank nach einem der vorhergehenden Ansprüche, **dadurch gekennzeichnet, dass** das Reagens (10) aus der Gruppe der Salze eines oder mehrerer Erdalkali-Elemente, beispielsweise MgCl₂, CaCl₂ ist.

7. Ammoniaktank nach einem der vorhergehenden Ansprüche, **dadurch gekennzeichnet, dass** das Reagens (10) ein Salz eines oder mehrerer 3d-Nebengruppenelemente, beispielsweise Mangan, Eisen, Kobalt, Nickel, Kupfer und/oder Zink ist.

8. Ammoniaktank nach einem der Ansprüche 1-5, **dadurch gekennzeichnet, dass** das Reagens (10) ein organischer Adsorber oder Ammoniumsalz, beispielsweise Ammoniumcarbamat, ist.

9. Ammoniaktank nach einem der Ansprüche 1-5, **dadurch gekennzeichnet, dass** das Reagens (10) eine Säure oder ein sauer reagierendes Salz, eine Lewis- oder Brönsted-saure Verbindung ist.

10. Ammoniaktank nach einem der Ansprüche 1-5, **dadurch gekennzeichnet, dass** das Reagens (10) aus der Gruppe von Stoffen gewählt ist, die in Gegenwart von Ammoniak (9) Komplexe bilden.

11. Ammoniaktank nach einem der Ansprüche 1-5, **dadurch gekennzeichnet, dass** das Reagens (10) als monolithischer oder poröser Festkörper vorliegt.

12. Ammoniaktank nach einem der Ansprüche 1-5, **dadurch gekennzeichnet, dass** das Reagens (10) als Granulat- oder Pulverschüttung vorliegt.

13. Ammoniaktank nach einem der Ansprüch 1-5, **dadurch gekennzeichnet, dass** das Reagens (10) als pastöse oder gel-artige Substanz vorliegt.

14. Ammoniaktank nach einem der Ansprüche 1-5, **dadurch gekennzeichnet, dass** das Reagens (10) ein Schaumbildner und/oder Gas ist.

15. Ammoniaktank nach einem der vorhergehenden Ansprüche, **dadurch gekennzeichnet, dass** eine solche Menge an Reagens (10) in dem Hohlraum (6) eingebracht ist, die ausreicht, das bei vollständiger Befüllung des Ammoniaktanks (1) maximal austretende Ammoniak (9) zu binden.

16. Ammoniaktank nach einem der vorhergehenden Ansprüche, **dadurch gekennzeichnet, dass** das Reagens (10) eine wärmeisolierende Wirkung aufweist.

## Claims

1. Ammonia tank of an exhaust gas treatment system of a vehicle, having a tank wall, **characterized in that** the tank wall is surrounded by a reagent (10) which reacts with ammonia (9), where the reagent (10) reacts with ammonia (9) to form a reaction product (16) which represents a tank leakage sealing product (17).

2. Ammonia tank according to Claim 1, **characterized in that** the ammonia tank is a pressure vessel which comprises or contains an ammonia-liberating substance, in particular an adsorbent, complexing agent or an ammonia salt.

3. Ammonia tank according to any of the preceding claims, **characterized in that** the tank wall (2) is configured as at least a double wall (3) and has at least one hollow space (6) which surrounds the entire tank volume and in which the reagent (10) is present.

4. Ammonia tank according to any of the preceding claims, **characterized in that** the reagent (10) reacts with ammonia (9) to form a reaction product (16) which has an optional indication function, in particular a warning function.

5. Ammonia tank according to any of the preceding claims, **characterized in that** the reagent (10) reacts with ammonia (9) to form a neutralization product (15) which is not harmful to human beings.

6. Ammonia tank according to any of the preceding claims, **characterized in that** the reagent (10) is from the group of salts of one or more alkaline earth metal elements, for example MgCl₂, CaCl₂.

7. Ammonia tank according to any of the preceding claims, **characterized in that** the reagent (10) is a salt of one or more 3d transition elements, for example manganese, iron, cobalt, nickel, copper and/or zinc.

8. Ammonia tank according to any of Claims 1-5, **characterized in that** the reagent (10) is an organic adsorbent or ammonium salt, for example ammonium carbamate.

9. Ammonia tank according to any of Claims 1-5, **characterized in that** the reagent (10) is an acid or an acidic salt, a Lewis- or Bronsted-acid compound.

10. Ammonia tank according to any of Claims 1-5, **characterized in that** the reagent (10) is selected from the group of materials which form complexes in the presence of ammonia (9).

11. Ammonia tank according to any of Claims 1-5, **characterized in that** the reagent (10) is present as a monolithic or porous solid.

12. Ammonia tank according to any of Claims 1-5, **characterized in that** the reagent (10) is present as a bed of granules or powder.

13. Ammonia tank according to any of Claims 1-5, **characterized in that** the reagent (10) is present as a paste- or gel-like substance.

14. Ammonia tank according to any of Claims 1-5, **characterized in that** the reagent (10) is a foam former and/or gas.

15. Ammonia tank according to any of the preceding claims, **characterized in that** the reagent (10) is introduced into the hollow space (6) in an amount which is sufficient to bind the maximum amount of the ammonia (9) which can exit when the ammonia tank (1) is completely filled.

16. Ammonia tank according to any of the preceding claims, **characterized in that** the reagent (10) has a thermally insulating action.

## Revendications

1. Réservoir à ammoniac pour installation de traitement des gaz d'échappement d'un véhicule, le réservoir présentant une paroi de réservoir, **caractérisé en ce que**
la paroi de réservoir est englobée dans un réactif (10) qui réagit avec l'ammoniac (9), le réactif (10) réagissant avec l'ammoniac (9) pour former un produit de réaction (16) qui constitue un produit (17) colmatant les fuites du réservoir.

2. Réservoir à ammoniac selon la revendication 1, **caractérisé en ce que** le réservoir à ammoniac est un réservoir sous pression qui présente ou contient une substance qui libère de l'ammoniac, en particulier un adsorbeur, un agent de formation de complexe ou un sel d'ammoniac.

3. Réservoir à ammoniac selon l'une des revendications précédentes, **caractérisé en ce que** la paroi (2) du réservoir est configurée comme paroi (3) au moins double et présente au moins une cavité (6) qui entoure la totalité du volume du réservoir et dans laquelle se trouve le réactif (10).

4. Réservoir à ammoniac selon l'une des revendications précédentes, **caractérisé en ce que** le réactif (10) réagit avec l'ammoniac (9) pour former un produit de réaction (16) qui joue un rôle d'indicateur et en particulier un rôle d'avertissement.

5. Réservoir à ammoniac selon l'une des revendications précédentes, **caractérisé en ce que** le réactif (10) réagit avec l'ammoniac (9) pour former un produit de neutralisation (15) non nocif pour l'homme.

6. Réservoir à ammoniac selon l'une des revendications précédentes, **caractérisé en ce que** le réactif (10) est sélectionné dans l'ensemble constitué des sels d'un ou plusieurs des éléments alcalino-terreux, par exemple MgCl₂ ou CaCl₂.

7. Réservoir à ammoniac selon l'une des revendications précédentes, **caractérisé en ce que** le réactif (10) est un sel d'un ou plusieurs des éléments du groupe secondaire 3d, par exemple le manganèse, le fer, le cobalt, le nickel, le cuire et/ou le zinc.

8. Réservoir à ammoniac selon l'une des revendications 1 à 5, **caractérisé en ce que** le réactif (10) est un adsorbeur organique ou un sel d'ammonium, par exemple le carbamate d'ammonium.

9. Réservoir à ammoniac selon l'une des revendications 1 à 5, **caractérisé en ce que** le réactif (10) est un acide ou un sel réagissant en conditions acides, un acide de Lewis ou un acide de Brönsted.

10. Réservoir à ammoniac selon l'une des revendications 1 à 5, **caractérisé en ce que** le réactif (10) est sélectionné dans l'ensemble des substances qui forment des complexes en présence d'ammoniac (9).

11. Réservoir à ammoniac selon l'une des revendications 1 à 5, **caractérisé en ce que** le réactif (10) présente la forme d'un solide monolithique ou poreux.

12. Réservoir à ammoniac selon l'une des revendications 1 à 5, **caractérisé en ce que** le réactif (10) présente la forme d'un granulé ou d'une poudre en vrac.

13. Réservoir à ammoniac selon l'une des revendications 1 à 5, **caractérisé en ce que** le réactif (10) présente la forme d'une substance pâteuse ou gélifiée.

14. Réservoir à ammoniac selon l'une des revendications 1 à 5, **caractérisé en ce que** le réactif (10) est un agent de formation de mousse et/ou un gaz.

15. Réservoir à ammoniac selon l'une des revendications précédentes, **caractérisé en ce que** la quantité de réactif (10) apportée dans la cavité (6) suffit pour lier la quantité maximale d'ammoniac (9) qui peut sortir du réservoir (1) à ammoniac lorsque ce dernier est complètement plein.

16. Réservoir à ammoniac selon l'une des revendications précédentes, **caractérisé en ce que** le réactif (10) exerce un effet d'isolation thermique.
